# EUROPEAN PATENT APPLICATION

(11) **EP 4 228 080 A1**
(43) Date of publication of application: **16.08.2023**
(21) Application number: 22155867.9
(22) Date of filing: 09.02.2022
(51) Int. Cl.: H01M 50/509, H01M 50/213, H01M 50/507

(54) **BATTERY MODULE**

(71) Applicant: Rimac Automobiles Ltd., 10431 Sveta Nedelja (HR)
(72) Inventor: Kisic, Daniel, 10450 Jastrebarsko (HR)
(74) Representative: Hoffmann Eitle

(57) **Abstract**

The present invention relates to a battery module. The battery module comprises at least a first battery cell, a second battery cell arranged in a first direction with respect to the first cell, and a third battery cell arranged in a second direction with respect to the first cell. The battery module also comprises a first interconnection arranged at least partially in the first direction and a second interconnection arranged at least partially in the second direction. The first interconnection is configured to connect the first battery cell and the second battery cell in parallel and the second interconnection is configured to connect the first battery cell and the third battery cell in series. Either the battery cells are aligned along a line in the second direction (y-axis), and immediate neighbouring battery cells in the first direction (x-axis) are disposed in a zig zag pattern in the plane defined by the first direction and the second direction. Or the battery cells are aligned along a line in the first direction (x-axis), and immediate neighbouring battery cells in the second direction (y-axis) are disposed in a zig zag pattern in the plane defined by the first direction and the second direction.

## Description

### Technical field

The present invention relates to the field of battery modules and battery packs.

### Background

In the art battery modules comprising a plurality of battery cells are known. Typically, a single battery module may comprise tens to hundreds or even thousands of battery cells which are densely packed within the battery module. The battery cells are usually held in place by a battery cell holder. The battery cell holder may have a plurality of apertures for receiving respective battery cells along their elongation direction. The battery module may also be equipped with collector electrodes adapted to collect electrical current from the battery cells and to enable the electrical current to be provided to an outside the battery module. In this manner, a plurality of battery modules may be electrically connected one to another to form a battery pack. However, a battery pack can also consist of a single battery module.

Battery modules, and therefore battery packs, find applications in a wide spectrum of technologies such as in the field of electromobility. For instance, their use in motor vehicles is well-known both in (fully) electric vehicles and hybrid vehicles for propelling the vehicle. Thus, battery modules, contribute, amongst other things, to bring forward renewable energy use and hence reduce reliance on fuel technology.

Further taking the field of electromobility as an example, a modular design of the battery pack is advantageous since it enables to optimize the space usage of the vehicles the battery module is fitted in. Battery modules of different shapes and size may in fact be arranged and configured differently within the vehicle.

In conventional battery packs different battery cells are electrically connected to each other via electrically conductive strips and are configured to output a predetermined voltage. A battery cell may also be referred to as battery unit cell.

Exemplarily the conductive strips may be made of metals such as copper or aluminium, although the material are not limited to these and different materials may also be used as long as they are conductive. The strips can also be referred to as interconnections and/or metal strips and may be placed on only one side of the battery module or alternatively on both sides of the module.

However, battery cells and interconnections usually produce a considerable amount of heat and need therefore to be cooled down. Temperature control is relevant not only to maintain satisfying performances of the battery pack and battery module over time but also to decrease their degradation over time and hence increase their life expectancy. Temperature control is also relevant for safety reasons, in fact it is advantageous to maintain the temperature below certain values.

Battery cells may be connected via the interconnections in parallels of battery cells and parallels of battery cells may be connected in series. A parallel of battery cell is a group of battery cells electrically connected in parallel. For instance, the negative terminal of a battery cell is connected with the negative terminal of another battery cell. On the other hand, in a series connection of battery cells, for instance, the negative terminal of the battery cell is connected to the positive terminal of another battery cell.

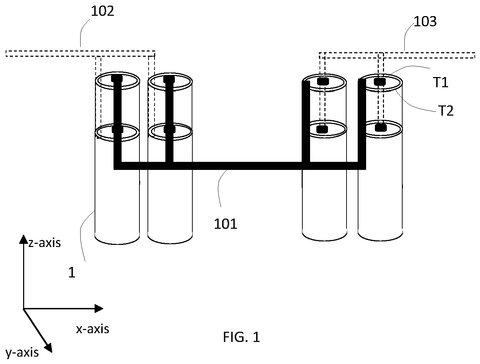

FIG. 1 shows exemplarily a connection configuration of a plurality of battery cells 1 according to the conventional art. Therein, two parallels of battery cells, each exemplarily comprising four battery cells, are connected in series by means of an interconnection 101. This configuration may be repeated so that more than two parallels of battery cells are connected in series with other parallels. For instance, via interconnections 102 and 103 the two parallels may be respectively connected to two additional parallels of battery cells (not shown in the figure).

According to FIG. 1 a battery cell has a cylindrical form and both the positive electrode terminal and the negative electrode terminal, T1 and T2, are placed on one ending portion of the battery cell 1. One electrode terminal, T1, is placed in the center of the circular surface of battery cell and the other electrode terminal T2 is placed so as to surround the first electrode terminal T1. In particular, the first electrode T1 may have a circular shape whereas the second electrode T2 may have an annular shape.

### Summary of the invention

There is a need in the art to reduce heat generation of the battery module. At the same time, it is also advantageous to increase efficiency of the current supply of the battery module.

The problems and drawbacks of the art are addressed by the subject matter of the independent claims. Further preferred embodiments are defined in the dependent claims.

The present disclosure makes it possible to decrease the amount of heat generated by the interconnections of the battery module. More in particular, the present disclosure enables to reduce the heat generation in a battery module due to the flow of electrical current in the interconnections. This is achieved by providing a suitable battery cell arrangement and suitable interconnections pattern.

According to an embodiment of the present disclosure there is provided a battery module comprising:
- a plurality of battery cells comprising at least:
   - a first battery cell (1),
   - a second battery cell (2) arranged in a first direction (x-axis) with respect to the first cell (1), and
   - a third battery cell (3) arranged in a second direction (y-axis) with respect to the first cell (1);
- a first interconnection (10) arranged at least partially in the first direction (x-axis) and a second interconnection (20) arranged at least partially in the second direction (y-axis).

The first interconnection (10) is configured to connect the first battery cell (1) and the second battery cell (2) in parallel and the second interconnection (20) is configured to connect the first battery cell (1) and the third battery cell (3) in series.

The battery cells are aligned along a line in the second direction (y-axis), and immediate neighbouring battery cells in the first direction (x-axis) are disposed in a zig zag pattern in the plane defined by the first direction and the second direction. Alternatively, the battery cells are aligned along a line in the first direction (x-axis), and immediate neighbouring battery cells in the second direction (y-axis) are disposed in a zig zag pattern in the plane defined by the first direction and the second direction.

According to another embodiment of the present disclosure there is provided a method of manufacturing a battery module comprising the steps of:
- providing (S1) a plurality of battery cells including at least a first battery cell (1), a second battery cell (2) and a third battery cell (3);
- arranging (S2) the second battery cell (2) in a first direction (x-axis) with respect to the first cell (1),
- arranging (S3) the third battery cell (3) in a second direction (y-axis) with respect to the first cell (1);
- aligning (S4) the battery cells along a line in one of the second direction (y-axis) and the first direction (x-axis),
- arranging in a zig zag pattern (S5) immediate neighbouring battery cells in the other one of the first direction (x-axis) and the second direction (y-axis);
- providing (S6) a first interconnection (10) arranged at least partially in the first direction (x-axis),
- providing (S7) a second interconnection (20) arranged at least partially in the second direction (y-axis),
the first interconnection (10) connecting the first battery cell and the second battery cell in parallel and the second interconnection (20) connecting the first battery cell (10) and the third battery cell (3) in series.

### Brief description of the drawings

Embodiments of the present invention shall be now described, in conjunction with the appended figures which are not to be seen as restricting or limiting the scope of present invention but should rather be seen as illustrating the inventive concept underlying the present invention.
Fig. 1 shows an arrangement of battery cells in a battery module according to the conventional art.
Fig. 2A shows an arrangement of the battery cells and of the interconnections according to an embodiment of the present disclosure.
Fig. 2B show a schematic arrangement of the battery cells.
Fig. 3 shows further details of the interconnections according to another embodiment of the present disclosure.
Fig. 4 shows a method of manufacturing a battery module according to an embodiment of the present invention.

### Detailed description of the invention

The heat generated by the interconnections due to the flowing of a current, increases with their electrical resistance, a phenomenon also known as Joule effect.

In particular, the heat flux of an electrical conductor, such as interconnections, is dependent on the resistance of the conductor itself. The resistance in turn can be expressed according to the formula R = ρ*L/A, wherein L is the length of the conductor, A is the cross-section area of the conductor and ρ is the resistivity and depends on the properties of the conductor.

Therefore, according to the configuration of the conventional art shown in FIG. 1 there is a problem since a relatively large current, i.e. that between a plurality of negative terminals and a plurality of positive terminals, flows through the interconnection 101.

An idea of the inventors of the present invention is to reduce the heat generation of the battery module by arranging the battery cells in a such a manner that interconnections connecting two parallels of battery cells in series are short. Preferably the cells are arranged so that the interconnections connecting two parallels in series are the shortest possible. In this manner, the current path is also the shortest possible and heat generation of the interconnections is reduced.

Another idea of the inventor of the present invention is to design the pattern of the interconnections to reduce the heat generation and increase efficiency.

In the following, whenever the specific position of a battery cell in the battery cell module, i.e. in the battery cell array, is not of particular relevance, reference may simply be made to the battery cell 1.

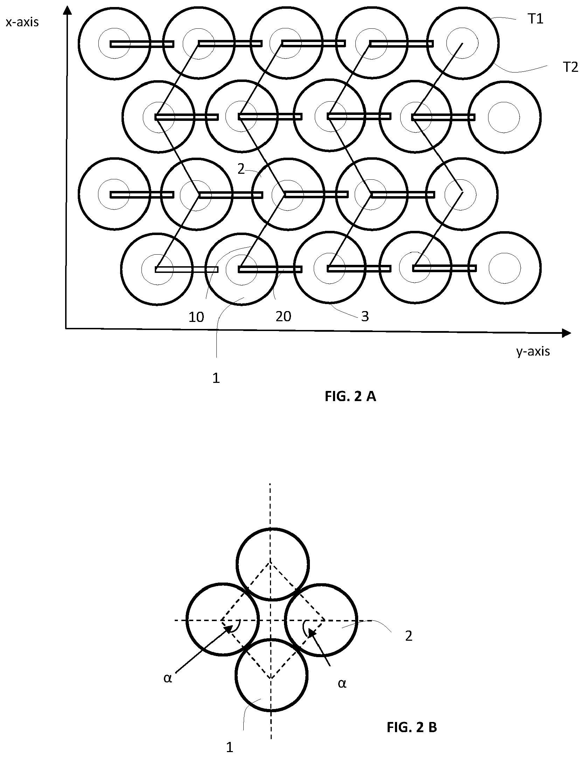

As shown in FIG. 2A, a battery module may comprise N battery cells (in FIG. 2 exemplarily N is equal to 4) arranged along a first direction, i.e. the x-axis, or x direction, in FIG. 2A. N is an integer number. These battery cells are also spatially arranged in offset one to another (i.e. zig zag or triangular pattern), so that the battery cell of the first row and the battery cell of the second row are offset one with respect to another but the battery cell of the first row and the battery cell of the third row are aligned one with another.

More generally, with reference to a same column, battery cells of odd rows are aligned one with another along a line, battery cells of even rows are aligned one with another along a line and battery cells of immediately neighbouring rows, i.e. row "i" and row "i+1" are offset one to another. For instance, the centres of two neighbouring battery cells in the first direction, may be displaced (i.e. offset) along the second direction of a distance equal to about two thirds of the diameter of a battery cell.

These cells are electrically connected in parallel via first interconnections 10 which also follows a zig zag pattern. That is, the first electrode terminal T1 of a first battery cell 1 is connected via first interconnection 10 to a first electrode terminal T1 of a second battery cell 2. The second battery cell 2 is arranged in the first direction with respect to the first cell 1.

The battery module may comprise M battery cells (in FIG. 2 M exemplarily is equal to 5), arranged along a second direction, i.e. the y-axis, or y direction, in Fig. 2A. M is an integer number. These battery cells are arranged along a line in the y-axis. That is, with reference to a same row, battery cells of different columns are all aligned along a line.

These battery cells are all connected in series via respective second interconnections 20. That is, the first electrode terminal T1 of the first battery cell 1 is connected via the second interconnection 20 to the second electrode terminal T2 of a third battery cell 3. The third battery cell 3 is arranged in the second direction with respect to the first cell 1.

The first electrode terminal T1 may be for example a positive terminal, whereas the second electrode terminal T2 may be exemplarily a negative terminal. The negative terminal may be, for instance, the whole body of the battery cell except the portion corresponding to the positive terminal, i.e. reference T1. That is, the negative terminal may be an outer conductive shell of the battery cell. This may be the case, for instance, for cylindrical battery cells.

The battery module, assuming a matrix shape, includes hence in total NxM battery cells.

FIG. 2A shows exemplarily a case in which the battery cells in the first direction (x-axis) are offset (i.e. displaced) along the second direction (y-axis). In the example, the battery cells are also aligned along the second direction (y-axis). However, this is only a possible configuration. In fact, more generally, the battery cells are aligned along a line in one of the first direction (x-axis) and the second direction (y-axis), and ii) immediate neighbouring battery cells in the other one of the first direction (x-axis) and second direction (y-axis) are disposed in a zig zag pattern in the plane defined by the first direction and the second direction. In other words, either the battery cells are aligned along a line in the second direction (y-axis), and immediate neighbouring battery cells in the first direction (x-axis) are disposed in a zig zag pattern in the plane defined by the first direction and the second direction; or the battery cells are aligned along a line in the first direction (x-axis), and immediate neighbouring battery cells in the second direction (y-axis) are disposed in a zig zag pattern in the plane defined by the first direction and the second direction.

As described, each battery cell of a parallel is connected in series with another battery cell of neighbouring parallel via a second interconnection 20. Therefore, the current flowing through the second interconnection 20 is lower than the current flowing in interconnection 101 of the conventional art of FIG. 1. Therefore, the joule effect is also lower than that of the conventional art.

The battery cell 1 may have an elongated form. For instance, it may have a cylindrical, a prismatic, an ellipsoid, a pouch or a conical form. In general, the battery cell 1 may be elongated along the z-axis (i.e. a third direction) so as to define a first ending portion of the battery cell and a second ending portion of the battery cell and therefore also a first side and a second side of the battery module.

The first, second and third directions may be orthogonal one to another.

At least one of the first and second electrode terminals T1 and T2 may be placed in correspondence or proximity of one of the two ending portions of the battery cell. Preferably, both the first and second electrode terminals T1 and T2 are placed in correspondence of the same ending portion. Taking the cylindrical form as an example, the ending portions are the circular surfaces defining the cylinder and the electrode terminals are placed thereon.

According to this embodiment, the first interconnections 10 and second interconnections 20 are disposed on a same ending portion of the battery cell. This configuration may have the advantage to simplify the manufacture of the battery module.

However, according to a possible modification, the first interconnection 10 and the second interconnection 20 may also be placed on both sides of the battery module. This may for instance be the case if the first terminal and the second terminal of the battery cells are situated on opposite sides of the battery module, i.e. on different circular surfaces of the cylinder.

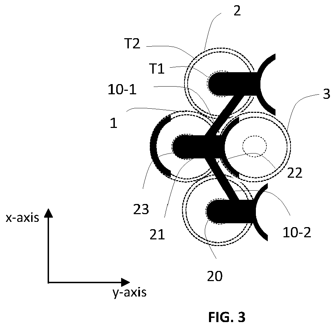

As it will be clear, the pattern exemplarily shown in FIG. 2A (and FIG. 2B) may be repeated in the x-y plane and the structure of the battery cells 1 and of the interconnections is symmetrical, with the only exception of battery cells and interconnections at the border of the battery module as also indicated below in connection with FIG. 3.

As shown in FIG. 2B, the battery cell 1 and battery cell 2 may be positioned so as to form an angle α of 60 degree with respect to the y-axis. In other words, a line joining the centres (in the x-y plane) of battery cell 1 and battery cell 2 may form an angle of substantially 60 degrees with the y-axis. The angle α of 60 degree may especially be preferable for battery modules including cylindrical battery cells. Substantially 60 degree may mean for instance that α may be comprised in a range of values including the value 60 degree. For instance, α may be between 55 and 65 degrees. According to the present disclosure the battery cells may be disposed in a rhombic pattern. The rhombic pattern may be defined with respect to the centre of the cylindrical battery cell. For instance, the rhombus may preferentially have two internal angles of 60 degrees or substantially 60 degrees. The other two internal angles may be 120 degrees or substantially 120 degrees. The rhombus pattern allows to decrease the distance between the battery cells while at the same time maximising the battery cells packaging.

According to some embodiment, battery cells may contact each other. That is, there is no gap (or spacing) between battery cells. Alternatively, a gap may be present between the battery cells. Some battery cells may by in contact with each other and some other battery cells may be separated by a gap. For instance, if the battery cells have an outer conductive shell, they may be contacted only with battery cells to which they are connected in parallel and the gap may be present between battery cells connected in series.

FIG. 3 shows details of the interconnection pattern according to another embodiment of the present disclosure. For sake of explanation it will be assumed that the battery cell 1 is not at the border of the battery module, since otherwise one or more of the first interconnections 10 and/or second interconnections 20 shown by the figure may be replaced by a collector electrode to transfer electrical current to an outside of the battery module.

The first interconnection 10 may comprise at least one oblong portion which is slanted with respect to the first direction and with respect to the second direction. Preferably, the first interconnection 10 comprises a first oblong portion 10-1 and a second oblong portion 10-2. The second interconnection 20 comprises a semi-circular portion 22 and a partially rectangular portion 21 arranged in the second direction. The semi-circular portion 22 is configured to contact with the second electrode terminal T2 of a battery cell 3. Moreover, the semi-circular portion 22 may be sized to the electrode terminal T2. For instance, it may have a width substantially equal to the width of the annulus of the electrode.

The partially rectangular portion 21 may have a rounded terminal 23 in proximity of the first electrode terminal T1 of the first battery cell 1.

Moreover, a cross-section of the second interconnections 20 may be larger than the cross-section of the first interconnections 10. For instance, a width of the partially rectangular portion 21 may be sized to the rounded terminal 23 and they may both be substantially larger than a width of the oblong portion 10-1.

It may be that some residual current may flow through the first interconnections 10. This may be the case during a voltage balance condition in the cell parallel as well as during a voltage imbalance condition in the cell parallel. A voltage imbalance condition may occur, for instance, if a battery cell discharges faster (or slower) than another battery cell in a same parallel. Nonetheless, this current flow is substantially smaller than the current flowing through the second interconnections 20.

Therefore, the cross-section of the first interconnections 10 only plays a minor role in generation of heat due to the Joule effect. On the other end it is important that the second interconnections 20 have a large cross-section, since the current predominantly flow through them.

The rectangular portion of the second interconnection 20 and the oblong portion of the first interconnection 10 may be connected by a common portion.

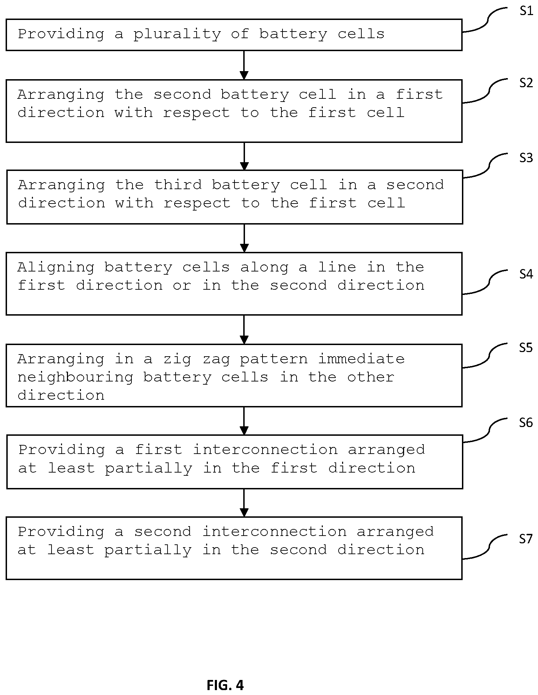

FIG. 4 shows a method of manufacturing a battery module.

The method for manufacturing a battery module comprises a first step of providing (S1) a plurality of battery cells including at least a first battery cell 1, a second battery cell 2 and a third battery cell 3. It also comprises a second step of arranging (S2) the second battery cell 2 in a first direction (x-axis) with respect to the first cell 1. If further comprises a third step of arranging (S3) the third battery cell 3 in a second direction (y-axis) with respect to the first cell 1. It further comprises a fourth step of aligning (S4) the battery cells along a line in one of the second direction (y-axis) or the first direction (x-axis). Furthermore, it comprises a fifth step of arranging in a zig zag pattern (S5) immediate neighbouring battery cells in the other one of the first direction (x-axis) and the second direction (y-axis).

Finally, it comprises a sixth step of providing (S6) a first interconnection 10 arranged at least partially in the first direction (x-axis) and a seventh step of providing (S7) a second interconnection 20 arranged at least partially in the second direction (y-axis).

According to the method, the first interconnection 10 connects the first battery cell and the second battery cell in parallel and the second interconnection 20 connecting the first battery cell 10 and the third battery cell 3 in series.

It is to be noted that the method of manufacturing the battery module is not limited by the order of the steps as presented above and the order of certain step may be inverted. For instance, the seventh step (S7) may be performed before the sixth step (S6). As a further example the fifth step of offsetting (S5) immediate neighbouring battery cells in the first direction may be performed before the fourth step of aligning (S4) the battery cells along a line.

## Claims

**1.** A battery module comprising:
- a plurality of battery cells, comprising at least:
- a first battery cell (1),
- a second battery cell (2) arranged in a first direction (x-axis) with respect to the first cell (1), and
- a third battery cell (3) arranged in a second direction (y-axis) with respect to the first cell (1) ;
- a first interconnection (10) arranged at least partially in the first direction (x-axis) and a second interconnection (20) arranged at least partially in the second direction (y-axis);
wherein the first interconnection (10) is configured to connect the first battery cell (1) and the second battery cell (2) in parallel and the second interconnection (20) is configured to connect the first battery cell (1) and the third battery cell (3) in series;
wherein
either the battery cells are aligned along a line in the second direction (y-axis), and immediate neighbouring battery cells in the first direction (x-axis) are disposed in a zig zag pattern in the plane defined by the first direction and the second direction;
or
the battery cells are aligned along a line in the first direction (x-axis), and immediate neighbouring battery cells in the second direction (y-axis) are disposed in a zig zag pattern in the plane defined by the first direction and the second direction.

**2.** The battery module of claim 1 wherein each battery cell of the plurality of battery cells comprises a first electrode terminal (T1) and second electrode terminal (T2), each battery cell being elongated along a third direction (z-axis), the third direction defining a first side and a second side of the battery module, wherein the first electrode terminal (T1) and the second electrode terminal (T2) of the plurality of battery cells are arranged on a same side of the battery module or wherein the first electrode terminal (T1) and the second electrode terminal (T2) of the plurality of battery cells are arranged on different sides of the battery module.

**3.** The battery module of claim 2, wherein the first interconnection (10) and the second interconnection (20) are both arranged on the same side of the battery module.

**4.** The battery module of any of the previous claims comprising:
- NxM battery cells, wherein N battery cell are disposed in the first direction (x-axis) and M battery cell are disposed in the second direction (y-axis);
- a plurality of first interconnections (10); and
- a plurality of second interconnections (20);
wherein the plurality of first interconnections (10) is configured to connect N battery cells in the first direction (x-axis) so as to form M parallels of battery cells and the plurality of second interconnections is configured to connect the M battery cell in the second direction (y-axis), so as to form N series of battery cell.

**5.** The battery module of any of the previous claims wherein battery cells every two lines in the first direction (x-axis) are aligned.

**6.** The battery module of any of the previous claims;
wherein the first interconnection (10) comprises an oblong portion which is slanted with respect to the first direction and with respect to the second direction and the second interconnection (20) comprises a semi-circular portion (22) and a partially rectangular portion (21) arranged in the second direction.

**7.** The battery module of claim 5 or 6;
wherein the rectangular portion of the second interconnection (20) and the oblong portion of the first interconnection (10) are connected by a common portion.

**8.** The battery module any of the previous claims, wherein a cross-section of the second interconnection (20) is larger than a cross-section of the first interconnection (10).

**9.** The battery module of claim 8, wherein a cross-section of the rectangular portion of the second interconnection (20) is larger than a cross-section of the oblong portion of the first interconnection (10).

**9.** A method of manufacturing a battery module comprising the steps of:
- providing (S1) a plurality of battery cells including at least a first battery cell (1), a second battery cell (2) and a third battery cell (3);
- arranging (S2) the second battery cell (2) in a first direction (x-axis) with respect to the first cell (1),
- arranging (S3) the third battery cell (3) in a second direction (y-axis) with respect to the first cell (1);
- aligning (S4) the battery cells along a line in one of the second direction (y-axis) and the first direction (x-axis),
- arranging in a zig zag pattern (S5) immediate neighbouring battery cells in the other one of the first direction (x-axis) and the second direction (y-axis);
- providing (S6) a first interconnection (10) arranged at least partially in the first direction (x-axis),
- providing (S7) a second interconnection (20) arranged at least partially in the second direction (y-axis),
the first interconnection (10) connecting the first battery cell and the second battery cell in parallel and the second interconnection (20) connecting the first battery cell (10) and the third battery cell (3) in series.
